# EUROPEAN PATENT SPECIFICATION

(11) **EP 2 190 658 B1**
(45) Date of publication and mention of the grant of the patent: **24.10.2012**
(21) Application number: 08799125.3
(22) Date of filing: 04.09.2008
(51) Int. Cl.: B32B 5/04, B32B 5/08, B32B 5/26, B32B 5/10, D04H 3/04, B32B 7/04, B32B 27/02, B32B 27/32

(54) **MULTILAYER VARIABLE STRETCH NONWOVEN FABRIC COMPOSITES**
MEHRLAGIGE VLIESGEWEBEVERBUNDSTOFFE MIT UNTERSCHIEDLICHEM DEHNUNGSVERHALTEN
COMPOSITES DE TISSUS NON TISSÉS EXTENSIBLES VARIABLES MULTICOUCHES

(30) Priority: 07.09.2007 US 970554 P
(43) Date of publication of application: 02.06.2010
(73) Proprietor: Invista Technologies S.à.r.l., 9000 St. Gallen (CH)
(72) Inventor: PASCAVAGE, Peter, W., Stuarts Draft, VA 24477 (US)
(74) Representative: Cockerton, Bruce Roger
(86) International application number: PCT/US2008/075168
(87) International publication number: WO 2009/032868

(56) References cited:
- WO-A-01/12888
- WO-A-95/04182
- WO-A-02/098653
- GB-A- 1 534 979
- US-A- 3 969 561

## Description

### Cross-Reference to Related Application

This application claims benefit of priority from Provisional Application No. 60/970,554, filed September 7, 2007.

### FIELD OF THE INVENTION

This invention relates to multilayer nonwoven fabric composites in which the fibers comprising certain of the nonwoven layers are of certain types and are laid down in a particular pattern and orientation to provide unique stretch properties for the composites. The resulting composite nonwovens have acceptable tensile strength and can have widely variable stretch characteristics.

### BACKGROUND OF THE INVENTION

Stretch nonwovens are enjoying rapid growth in the hygiene Industry. The majority of products in use either have a machine direction stretch capability, such as the Kimberly Clark Demique® and "Flex-All" products or cross direction stretch such as the "Golden Phoenix" or "Tredegar" nonwoven - elastic film laminates. Stretch nonwovens which stretch in one or several directions provide valuable functionality to hygiene related products as well as opening new end uses such as apparel to such stretch nonwovens.

Technologies that are known to produce stretch nonwovens include those which are based on laminates of elastic films and nonwovens, fibers and nonwovens, or multiple nonwoven layers wherein each layer has characteristic attributes designed to achieve certain functions. A well known form of the multilayer nonwoven composite construction consists of a meltblown, elastomeric inner layer surrounded by two spunbond, hard (i.e. without appreciable stretch) fiber outer layers. Stretch nonwovens in this form can have single direction stretch either in the machine direction or the cross direction by laminating the elastomeric layer to the spunbond outer layers while the elastomeric layer is in a stretched configuration.

Commercial producers have also made fully elastic multi-directional spunbond nonwovens by using elastomeric thermoplastic polymers in conventional spunbond processes. However, some of these products, while exhibiting excellent elasticity also have an objectionable rubber like hand that is characteristic of elastic polymers. The use of elastomeric polymers in an interior nonwoven layer, shielded by hard fiber outer nonwoven layers avoids this problem, especially if low denier hard fibers are employed.

Variation of the stretch characteristics of multilayer nonwoven webs can be provided by altering the orientation of the non-elastomeric hard filaments or fibers which are formed as nonwoven outer layers of laminated composites with elastomeric inner layer(s). Orientation of such outer layer hard filaments or fibers so that they are aligned predominately in the machine direction will tend to minimize or eliminate the propensity of a nonwoven composite to stretch in the machine direction while still preserving the ability of the composite to stretch somewhat in the cross direction. Nonwoven composite webs of this type have been disclosed, for instance, in U.S. Patent No. 5,393,599.

Regardless of fiber orientation, variation in stretch characteristics in general for such multilayer composites can also be provided by utilizing fibers in the nonwoven outer layer(s) of such composites which are bicomponent in composition and/or somewhat elastomeric. In such nonwoven structures, there remains a need to balance the desired stretch properties of the nonwoven with the need to avoid unsuitable tactile, hand or aesthetic characteristics of the outer layer fibers which are used.

Notwithstanding the availability of technology for preparation of multilayer nonwoven composites of primarily unidirectional, e.g., in the cross machine direction, or multi-directional, e.g., isotropic, stretch properties and having certain fiber types and orientation in the composite layers, it would be desirable and useful to identify additional types of such nonwoven composite structures which can be varied in stretch characteristics and fiber composition in order to meet potential in-use needs and requirements. Such composites would be those which can be prepared using conventional spunbonding and meltblowing apparatus and processing and without the need for additional, time and expense-adding post-web fabrication treatment steps to bring about desired stretch properties.

### SUMMARY OF THE INVENTION

This invention is directed to nonwoven fabric composites, and specifically to such composites of the general spunbond-meltblown (SM), spunbond-meltblown-spunbond (SMS), or spunbond-meltblown-meltblown-spunbond (SMMS) types. Such fabric composites are prepared by forming or assembling the layers of the composite in a machine direction.

In one embodiment, such nonwoven fabric composites comprise: a) at least one inner layer comprising meltblown fibers; and b) at least one outer layer disposed on one side of the at least one inner layer. The outer layer(s) is/are fashioned from spunbond, continuous filament fibers comprising different fibers formed from at least two different types of polymeric material.

Such spunbond fibers are deposited during formation of the outer layer(s) so as to form a plurality of discrete, substantially parallel stripes of fibers within each outer layer. One of at least two of these stripes of fibers has a polymeric makeup which is different and distinct from the other of the at least two stripes of fibers by virtue of comprising fibers therein which are formed from different types of polymeric material.

The substantially parallel, different stripes of fibers are deposited during formation of the outer layer(s) so as to be predominately oriented in the machine direction of the nonwoven fabric composite. The inner and outer layers of this composite fabric are bonded together via thermal, adhesive, ultra-sonic or mechanical bonding means.

In another invention embodiment, the nonwoven fabric composites herein comprise: a) at least one inner layer comprising elastomeric meltblown fibers; and b) two outer layers disposed on opposite sides of the at least one inner layer. At least one of the two outer layers comprises spunbond, continuous filament fibers comprising both first spunbond fibers formed from a first type of polymeric material and second spunbond fibers formed from a second type of polymeric material. This second type of polymeric material is different from the first type of polymeric material.

These spunbond fibers are deposited during formation of at least one of the outer layers so as to form a plurality of alternating, discrete, substantially parallel stripes of fibers within the outer layer(s). Such alternating stripes of fibers are formed alternately of the first spunbond fibers and the second spunbond fibers. These alternating, discrete, substantially parallel stripes of fibers are furthermore deposited during formation of the outer layer(s) so as to be predominately oriented in the machine direction of the nonwoven fabric composite. All layers of the nonwoven fabric composite are bonded together via thermal, adhesive, ultra-sonic or mechanical bonding means.

The composites herein can exhibit variable amounts of stretch in both the machine and cross directions depending upon the polymeric makeup of the meltblown inner layer(s) and the spunbond fibers in the different stripes of fibers within the spunbond outer layer(s). Selection of appropriate types of polymeric makeup for the various fibers within the composite structures can lead to realization of selected desired ratios of machine direction stretch to cross direction stretch for such nonwoven fabric composites.

### DETAILED DESCRIPTION OF THE INVENTION

The nonwoven fabric composites herein, as well as the individual layers therein and components and characteristics thereof, can be described in conventional terms typically used in connection with articles of this type. Some of the common terms used in connection with the description of the composite articles herein are defined as follows:

As used herein, the term "nonwoven" fabric, layer or web means a fabric, layer or web having a structure of individual fibers or threads which are interlaid, but not in an identifiable manner as in a knitted fabric. Nonwoven fabrics, layers or webs have been formed from many processes such as for example, meltblowing processes, spunbonding processes, and bonded carded web processes. The basis weight of nonwoven fabrics, layers or webs is usually expressed in ounces of material per square yard (osy) or grams per square meter (gsm). To convert from osy to gsm, osy values are multiplied by 33.91.

The nonwoven fabrics, layers or webs described herein comprise an array of fibers or filaments. The terms "fibers" and "filaments" are used interchangeably herein.

As used herein the term "meltblown fibers" means fibers formed by extruding a molten thermoplastic material through a plurality of fine, usually circular, die capillaries as molten threads or filaments into converging high velocity, usually hot, gas (e.g. air) streams which attenuate the filaments of molten thermoplastic material to reduce their diameter, which may be to microfiber diameter, for example, less than about 1.0 denier per filament. Thereafter, the meltblown fibers are carried by the high velocity gas stream and are deposited on a collecting surface to form a web of randomly disbursed meltblown fibers. Such a process is disclosed, for example, in U.S. Patent No. 3,849,241 to Butin et al. Meltblown fibers are microfibers which may be continuous or discontinuous, and are generally tacky when deposited onto a collecting surface.

As used herein, the term "spunbond fibers" refers to small diameter fibers which are formed by extruding molten thermoplastic material as filaments from a plurality of fine, usually circular capillaries of a spinneret with the diameter of the extruded filaments then being rapidly reduced as by, for example, in U.S. Patent No. 4,340,563 to Appel et al.; U.S. Patent No. 3,692,618 to Dorschner et al.; U.S. Patent No. 3,802,817 to Matsuki et al.; U.S. Patent. Nos. 3,338,992 and 3,341,394 to Kinney; U.S. Patent No. 3,502,763 to Hartman; and U.S. Patent No. 3,542,615 to Dobo et al. Spunbond fibers are generally not tacky when they are deposited onto a collecting surface. Spunbond fibers are generally continuous.

For both spunbond and meltblown fibers, fiber diameters are usually expressed in microns (µm). Fiber size is also characterized by the term "denier". As used herein, "denier" refers to the weight in grams per 9000 meters of an individual filament or fiber.

The fibers used to form the spunbond and meltblown layers of the composites herein are fashioned from polymer material. As used herein the term "polymer" generally includes but is not limited to, homopolymers, copolymers, such as for example, block, graft, random and alternating copolymers, terpolymers, etc. and blends and modifications thereof. Furthermore, unless otherwise specifically limited, the term "polymer" shall include all possible geometrical configurations of the molecule. These configurations include, but are not limited to isotactic, syndiotactic and random symmetries.

### Meltblown Layer(s)

The nonwoven fabric composites herein essentially comprise at least one inner layer comprising a web of meltblown fibers. Such meltblown fibers are preferably elastomeric and can be fashioned from any of a wide variety of elastomeric thermoplastic polymers. Generally, any suitable elastomeric fiber-forming resins or blends containing the same may be utilized for the elastomeric meltblown fibers. Such materials include elastic polyolefins, elastic polyesters, elastic polyurethanes, elastic polyamides, elastic copolymers of ethylene and at least one vinyl monomer, and elastic A-B-A' block copolymers wherein A and A' are the same or different thermoplastic polymer.

One preferred type of elastomeric polymer for the meltblown layer comprises the elastic polyolefins. Such materials include random polyolefin copolymers such as copolymers of ethylene and propylene or copolymers of ethylene and/or propylene and at least one other α-olefin. Polyolefin copolymers of this type include those marketed under the tradename Vistamaxx^{®} by ExxonMobil Chemical Company and Olympus^{®} by the the Dow Chemical Company. Blends of such random copolymers with isotactic polypropylene are also useful as polymers which can form the meltblown nonwoven layer.

In other instances, the elastomeric meltblown fibers of the inner layer(s) may be made from block copolymers having the general formula A-B-A' where A and A' are each a thermoplastic polymer endblock which contains a styrenic moiety such as a poly (vinyl arene) and where B is an elastomeric polymer midblock such as a conjugated diene or a lower alkene polymer. The block copolymers may be, for example, (polystyrenelpoly(ethylenebutylene)lpolystyrene) block copolymers available from the Shell Chemical Company under the trademark KRATON^{®} G. One such block copolymer may be, for example, KRATON^{®} G-1657.

Other exemplary elastomeric materials which may be used for the meltblown inner layer(s) include polyurethane elastomeric materials such as, for example, those available under the trademark ESTANE^{®} from B. F. Goodrich & Co., polyamide elastomeric materials such as, for example, those available under the trademark PEBAX^{®} from the Rilsan Company, and polyester elastomeric materials such as, for example, those available under the trade designation HYTREL^{®} from E. I. DuPont De Nemours & Company. Formation of elastomeric meltblown fibers from polyester elastic materials is disclosed in, for example, U.S. Pat. No. 4,741,949 to Morman et al.

Useful elastomeric polymers also include, for example, elastic copolymers of ethylene and at least one vinyl monomer such as, for example, vinyl acetates, unsaturated aliphatic monocarboxylic acids, and esters of such monocarboxylic acids. The elastic copolymers and formation of elastomeric meltblown fibers from those elastic copolymers are disclosed in, for example, U.S. Patent No. 4,803, 117.

In certain preferred embodiments herein, the fibers used in the meltblown layer(s) of the composites herein may be multicomponent fibers. As used herein, the term "multicomponent fibers" refers to fibers that have been formed from at least two distinct, e.g., immiscible, component polymers, or the same polymer with different properties or additives, extruded from separate extruders but spun together to form one fiber or filament. Multicomponent fibers are also sometimes referred to as conjugate fibers or bicomponent fibers, although more than two components may be used.

In multicomponent fibers, the distinct polymers can be arranged in substantially constantly positioned distinct zones across the cross-section of the multicomponent fibers and extend continuously along the length of the multicomponent fibers. The configuration of such a multicomponent fiber may be, for example, a concentric or eccentric sheath/core arrangement wherein one polymer is surrounded by another, or may be a side-by-side arrangement, an "islands-in-the-sea" arrangement, or arranged as pie-wedge shapes or as stripes on a round, oval or rectangular cross-section fiber, or other configurations. Multicomponent fibers are taught in U.S. Patent No. 5,108,820 to Kaneko et al and U.S. Patent No. 5,336,552 to Strack et al. Conjugate fibers are also taught in U.S. Patent No. 5,382,400 to Pike et al.

Conjugated fibers may be used to produce crimp In the fibers by using the differential rates of expansion and contraction of the two (or more) polymers. Bicomponent fibers in the meltblown layer(s) herein may also comprise a relatively elastomeric polymer as one component and a relatively non-elastomeric distinct polymer as another component thereof. For example, bicomponent fibers for use in the meltblown layer(s) can comprise a core of elastomeric polymer such as a Kraton^{®} block copolymer surrounded by a sheath of a distinct and immiscible, relatively non-elastomeric polymer such as polypropylene.

For two component fibers, the polymers may be present in ratios of 75/25, 50/50, 25/75 or any other desired ratios. In addition, any given component of a multicomponent fiber may desirably comprise two or more polymers as a multlconstituent blend component.

The elastomeric fibers within the meltblown inner layer(s) of the composites herein will generally be microfibers of less than about 1.0 denier per filament average. They can be formed using a 35 to 75 holes per inch (hpi) meltblowing die. The basis weight of the meltblown inner layer(s) will generally range from about 5 to about 40 g/m², more preferably from about 10 to about 30 g/m².

The fabric composites herein may comprise more than one inner layer. For example, composites herein may be of the SMMS configuration having two distinct meltblown inner layers therein.

### Spunbond Layers

The fabric composites herein will further comprise at least one outer layer disposed on one side of the at least one meltblown inner layer, Preferably, the fabric composites herein will comprise two outer layers of spunbond fibers disposed on opposite sides of the at least one meltblown inner layer. Various spunbonding techniques exist, but all typically include the basic steps of extruding continuous filaments, quenching the filaments, drawing or attenuating the filaments by a high velocity fluid, and collecting the filaments as fibers on a surface, e.g., forming wire or other substrate, to form a web. Exemplary spunbonding processes known in the art include Lurgi spunbonding processes, wherein multiple round or tube-shaped venturi nozzles attenuate the filaments, and slot draw spunbonding processes, wherein the multiple tube attenuators are replaced with a slot-shaped attenuator which extends widthwise of the machine.

Any of the spunbonding techniques known in the art may be used to form the spunbond outer layers of the composites of the present invention. Exemplary spunbonding techniques are described, for example, in U.S. Patent Nos. 4,340,563 and 4,405,297 to Appel et al; U.S. Patent No. 4,692,106 to Grabowski et al and U.S. Patent No. 4,820,459 to Reifenhäuser. The spunbonded webs may be preformed or formed in-line and sequentially along with the elastomeric meltblown layer(s).

Any polymer or polymer blend or other combination of polymers which is capable of being melt spun to form substantially continuous filaments may be used in to form the spunbonded outer layers of the composites herein. Examples of polymers which may be suitably used to form spunbonded webs include polyester, acrylic, polyamide, polyolefins such as polyethylene, polypropylene, copolymers of the same, or the like, or other thermoplastic polymers, as well as copolymers and blends and combinations of these and other thermoplastic polymers.

Like the fibers used in the meltblown layer(s) of the composites herein, the spunbond fibers of the outer layers may also comprise multicomponent fibers as hereinbefore described. Spunbond multicomponent fibers are those fashioned form different incompatible polymers such that there are distinct regions of the two or more incompatible polymers with the spunbond fiber. Suitable bicomponent fibers for the spunbond layers, for example, can comprise the same kind of Kraton^{®} core/polypropylene sheath fiber which can be used in the meltblown layer(s).

Whatever the polymeric makeup of the filaments used to prepare the spunbond layers of the composites herein, such polymeric material will generally exhibit a melt flow rate of from about 20 to about 55. More preferably, the melt flow rate of the polymers used in the spunbond layers will range from about 25 to about 35. Melt flow rate (mfr) can be determined herein using the method of ASTM D-01238-04c entitled Standard Test Method for Melt Flow Rates of Thermoplastics by Extrusion Plastometer.

Preferably the spunbond filaments from the spinnerets are only partially attenuated before being laid down as fibers to form the spunbond nonwoven webs used in the composite outer layer(s). For purposes herein, such filaments are partially attenuated if they are drawn to only an average of no less than about 1.8 denier per filament. More preferably, the spunbond filaments used in the outer layers herein are partially attenuated to an average denier per filament of from about 1.8 to about 3.0. By utilizing fibers in the spunbond layers which are only partially attenuated, the resulting fabric composites can exhibit additional attenuation and stretch when elongated in the cross direction.

An essential feature of the present invention is that the spunbond fibers of at least one outer layer are deposited within such a layer in the form of a plurality of discrete, substantially parallel stripes or rows. Furthermore, at least two of these stripes will have polymeric constituents which are different from each other. This difference in polymeric makeup is brought about by virtue of the two different stripes each comprising fibers which are different from each other by virtue of having been formed from two different types of polymeric material. Preferably at least one, and preferably both, of the spunbond outer layers will comprise at least 10, and more preferably at least 25, of the discrete, substantially parallel stripes or rows.

For purposes of this invention, two polymer types are different from each other if they exhibit different and distinguishable chemical, physical, rheological, microstructural, functional or performance properties. Thus polymer types may be different and distinguishable if and because they have different monomer types and contents, molecular weights, tacticities or other molecular arrangements, crystallinities, melting points, glass transition temperatures, viscosities, melt flow rates, elastomeric characteristics, etc. Two aliquots of the same polymeric material may, in fact, become different polymer types if they have been processed in different ways such as, for example, by being attenuated (drawn) to different extents.

In a preferred embodiment, a first set of spunbond fibers will comprise one polymer type and a second set of spunbond fibers will comprise a second polymer type. For example, certain of the spunbond fibers can comprise substantially 100%, of polypropylene. Others of the spunbond fiber can comprise compatible blends of polypropylene with elastomeric polymers such as copolymers of ethylene and propylene or copolymers of ethylene and/or propylene and at least one other α-olefin. As indicated hereinbefore with respect to the elastomers useful for the meltblown layer, elastomeric polyolefin copolymers of this type include those marketed under the tradename Vistamaxx^{®} by ExxonMobil Chemical Company. If such compatible blends of polypropylene with other polymeric materials are used for one set of the spunbond layer fibers, it is preferred that the polypropylene content of such fibers should range from about 5% to about 90% by weight.

The stripes of spunbond fibers deposited to form the outer layer(s) can comprise those of three or more different polymer types. Preferably, however, the outer layer(s) will comprise only two types of stripes which are deposited in an alternating pattern of parallel of stripes, such as for example in an ABABA etc. configuration. More preferably, these two types of stripes will be of uniform width. Frequently, there will be from about 50 to about 150, more preferably from about 70 to about 140, stripes of uniform width and alternating pattern per meter of outer layer cross section width.

Discrete stripes of the spunbond fibers can be formed using one or more spinning beams which are fed by two or more separate extruders which provide the two or more distinct types of polymers for spinning. If a single spinning beam is used it can be compartmented to spin the separate polymer filament types in the desired stripes relationship. If two spinning beams are used, they can be positioned to provide the separate rows of filaments for deposition in the requisite pattern of the filament stripes. Apparatus of this type is described, for example, in U.S. Patent No. 6,872,339.

The stripes of fibers In the spunbond outer layer(s) of the fabric composites herein are also to be oriented predominately in the machine direction of the spunbond outer layer(s). Stripes and fibers in these layers are considered to be oriented predominately in the machine direction If the resulting spunbond webs exhibit anisotropic properties. Thus, for example, such spunbond webs as used herein will exhibit a ratio of tensile strength (breaking tenacity) in the machine direction to tensile strength (breaking tenacity) in the cross direction of at least about 1.25:1. More preferably, this ratio of MD to CD tensile strength of the spunbond webs used in the composites herein will range from about 1.5:1 to about 2.5:1.

A variety of techniques and apparatus types are available for forming spunbond webs having the stripes of filaments/fibers therein oriented predominately in the machine direction. Such techniques and apparatus types can include those which alter or vary the extent to which stripes of spunbond filaments are diffused, admixed or randomly oriented before being laid down or deposited on a forming wire, belt, substrate or other collection surface to form the desired spunbond webs. The simplest means for effecting machine direction orientation of the stripes of spunbond fibers in the spunbond layers is the elimination of the various conventional means which have been typically used in the spunbonding art to randomize the drawn spunbond fibers before they are deposited. In this manner, the orientation of the stripes of fibers from the attenuator can be maintained in substantially parallel relationship to the machine direction of the substrate onto which such stripes of fibers are deposited.

Use of deflector guide plates or other mechanical elements for control of the orientation of the stripes of spunbond filaments which are deposited onto a forming substrate can also be used. Such means are shown, for example, in U.S. Patent Nos. 5,366,793 and 7,172,398 and in U.S. Patent Publication No. 2006/0137808. Use of varying air stream direction to adjust spunbond filament stripe laydown and to thereby effect machine direction orientation of the laid down filaments is shown in U.S. Patent No. 6,524,521.

Each of said spunbond layers of the composites herein independently will have a basis weight ranging from about 5 to about 45 g/m².

### Fabric Composite Assembly

After or as the spunbond webs which are to serve as outer layers of the composites herein have been or are being formed, they are positioned in a laminar surface-to-surface relationship with the at least one elastomeric layer to form the fabric composites herein. The layers can be joined together to make, for example, an SMS laminate using techniques familiar to persons skilled in the art. The spunbond and meltblown layers can be formed and joined using an in-line process as described In U.S. Patent No. 4,041,203, or any suitable alternative process. Any of the spunbond and meltblown layers may be formed in-line. The layers may be sequentially laid over each other and bonded. A suitable multi-station apparatus setup for the preparation of the SMS-type fabric composites herein is described in U.S. Patent No. 6, 770,156.

The laminated layers will generally be united together at intermittent discrete bond regions via standard bonding techniques including thermal, adhesive, ultrasonic or mechanical bonding means. Preferably, the composites herein are formed by thermally bonding the elastomeric inner layer(s) and the two spunbond outer layers together. In one embodiment, the laminated composite is thermally bonded with a discontinuous pattern of points, lines, or other pattern of intermittent bonds using methods known in the art. Intermittent thermal bonds can be formed by applying heat and pressure at discrete spots on the surface of the spunbond web, for example by passing the layered structure through a nip formed by a patterned calendar roll and a smooth roll, or between two patterned rolls. One or both of the rolls are heated to thermally bond the fabric.

The bonding conditions and bonding pattern can be selected to provide the desired combination of strength, softness, and drapeability in the bonded fabric. For the fabric composites of the present invention, a roll bonding temperature in the range of 110° C to 130° C. and a bonding nip pressure in the range of from about 100 to 400 pounds/linear inch (175-700 N/cm) has been found to provide good thermal bonding. The optimum bonding temperature and pressure are functions of the line speed during bonding, with faster line speeds generally requiring higher bonding temperatures.

The fabric composites herein can also be thermally bonded using ultrasonic energy, for example by passing the fabric composite between a horn and a rotating anvil roll, for example an anvil roll having a pattern of protrusions on the surface thereof. Alternately, the fabric composites herein can be bonded using through-air bonding methods known in the art, wherein heated gas such as air is passed through the fabric at a temperature sufficient to bond the fibers together where they contact each other at their cross-over points while the fabric is supported on a porous surface.

Depending upon the end use application, the fabric composites herein may have a basis weight of about 10 to 300 grams per square meter (gsm), or about 15 to 200 gsm, or about 20 to 100 gsm, or about 25 to 50 gsm. The basis weight of the composites herein will generally be substantially uniform across the surface area of the composite.

Each of the spunbond and meltblown layers may constitute about 5 to 60% of the weight of, for example, a preferred SMS-type laminate, or about 15 to 50% of the weight of the laminate, or about 20 to 40% of the weight of the laminate, with three layers together constituting 100% of the SMS laminate. The fabric composites herein can have a wide variety of stretch characteristics in both the machine and cross directions. In one embodiment, the composites herein can exhibit stretch in the cross direction ranging from about 50% to about 250% with minimal stretch, e.g., less than 50%, in the machine direction.

### EXAMPLE

An SMS fabric composite having a basis weight of 85 gsm is prepared from two outer spunbond layers composed of alternating stripes of polypropylene (P3155^{®} from Exxon Mobil Chemical Company) filaments and stripes of filaments comprising a blend of about 25% of this polypropylene with a random ethylene/propylene copolymer (Vistamaxx^{®} 2230 from ExxonMobil Chemical Company). The inner layer web of such a composite comprises elastomeric meltblown fibers comprising the same random ethylene/propylene copolymer (Vistamaxx^{®} 2230 from ExxonMobil Chemical Company). Such a composite is prepared in-line by laying down a first spunbond layer on a one-meter wide web-forming belt, laying down the layer of meltblown elastomeric filaments on the first spunbond layer and finally laying down the second spunbond outer layer on the formed web of meltblown fibers. Such sequential formation of the SMS fabric composite of this type is carried out on an apparatus setup similar to that described in U.S. Patent No. 6,427,745.

The filaments of the two spunbond layers are laid down in discrete alternating stripes of the two polymer types. Such stripes are of uniform width, and there are 78 of these stripes per meter of spunbond layer cross section width. The stripes of filaments of the spunbond layers are directed to the forming belt (or to web layers thereon) through a spinning distance (attenuator to belt), and in the absence of any fiber randomizing or diffuser means, to thereby provide a fiber stripe orientation within the spunbond layers which is predominately in the machine direction.

The filaments of the elastomeric polymer blend of the meltblown layers are formed using a 50 holes per inch (hpi) meltblowing die. The meltblown layer is formed so as to be isotropic with randomly oriented fibers therein.

The meltblown layer constitutes 20% by weight of the SMS composite. The SMS layers are bonded together using a fixed crown calendar with one pattern. The resulting SMS composite has 180% stretch in the cross direction with less than 50% stretch in the machine direction.

## Claims

1. A multilayer nonwoven fabric composite prepared by forming the layers of said composite in a machine direction, said multilayer nonwoven fabric composite comprising:
a) at least one inner layer comprising meltblown fibers; and
b) at least one outer layer comprising spunbond, continuous filament fibers, with said at least one outer layer being disposed on one side of said at least one inner layer;
wherein the spunbond fibers in said at least one outer layer comprise different fibers formed from at least two different types of polymeric material; and
wherein said spunbond fibers are deposited during formation of said at least one outer layer so as to form a plurality of discrete, substantially parallel stripes of fibers within said at least one outer layer, with one of at least two of said stripes of fibers having a polymeric makeup which is different and distinct from the other of said at least two of said stripes by virtue of comprising fibers therein which are formed from different types of polymeric material; and
wherein said substantially parallel, different stripes of fibers are deposited during formation of said at least one outer layer so as to be predominately oriented in the machine direction of said nonwoven fabric composite; and
wherein said at least one inner layer and said at least one outer layer of said fabric are bonded together via thermal, adhesive, ultra-sonic or mechanical bonding means.

2. A fabric composite according to Claim 1 wherein one type of stripe of said spunbond fibers in at least one of said outer layers comprises polypropylene and another type of stripe comprises polypropylene blended with an elastomeric polymer.

3. A fabric composite according to Claim 2 wherein said spunbond fibers in each of said outer layers are independently partially attenuated to an average of from about 1.8 to about 3.0 denier per filament.

4. A fabric composite according to Claim 3 wherein one type of stripe of spunbond fibers in said at least one outer layer comprises blends of polypropylene with copolymers of ethylene and propylene or copolymers of ethylene and/or propylene and at least one other α-olefin.

5. A fabric composite according to Claim 3 wherein one type of stripe of spunbond fibers in one or both of said outer layers comprises multicomponent fibers each comprising at least one elastomeric polymer and at least one distinct non-elastomeric polymer.

6. A fabric composite according to Claim 5 wherein one type of stripe of spunbond multicomponent fibers comprises bicomponent fibers comprising an elastomeric polymer core selected from polyesters, polyurethanes, polyamides, copolymers of ethylene and at least one vinyl monomer, and A-B-A' block copolymers and a non-elastomeric sheath comprising non-elastomeric polyolefin.

7. A fabric composite according to Claim 3 wherein said spunbond fibers in the stripes of said at least one outer layer independently comprise polymers or polymer combinations having a Melt Flow Rate of from about 20 to about 80.

8. A fabric composite according to Claim 1 wherein said spunbond fibers are extruded as stripes of two types of filaments in an alternating pattern of parallel stripes.

9. A fabric composite according to Claim 1 wherein said parallel stripes of spunbond fibers are oriented predominately in the machine direction within each spunbond layer by maintaining the orientation of said stripes of fibers substantially parallel to the machine direction of the substrate onto which such stripes of spunbond fibers have been deposited to form said spunbond layers.

10. A fabric composite according to Claim 9 wherein each of said spunbond layers independently exhibits a ratio of tensile strength in the machine direction to tensile strength in the cross direction of at least about 1.25:1.

11. A fabric composite according to Claim 1 wherein each of said spunbond layers independently has a basis weight ranging from about 5 to about 45 g/m².

12. A fabric composite according to Claim 1 wherein the fibers of said at least one meltblown layer comprise polymeric materials selected from the group consisting of elastic polyolefins, elastic polyesters, elastic polyurethanes, elastic polyamides, elastic copolymers of ethylene and at least one vinyl monomer, and elastic A-B-A' block copolymers wherein A and A' are the same or different thermoplastic polymer.

13. A fabric composite according to Claim 12 wherein the fibers of said at least one meltblown layer comprise elastic polyolefins selected from the group consisting of random copolymers of ethylene and propylene or random copolymers of ethylene and/or propylene and at least one other α-olefin, and blends of said random copolymers with isotactic polypropylene.

14. A fabric composite according to Claim 12 wherein said meltblown fibers in said at least one inner layer comprise multicomponent fibers each comprising at least one elastomeric polymer and at least one distinct non-elastomeric polymer.

15. A fabric composite according to Claim 14 wherein said meltblown multicomponent fibers are bicomponent fibers comprising an elastomeric polymer core selected from polyesters, polyurethanes, polyamides, copolymers of ethylene and at least one vinyl monomer, and A-B-A' block copolymers and a non-elastomeric sheath comprising non-elastomeric polyolefin.

16. A fabric composite according to Claim 15 wherein said bicomponent fibers comprise a sheath of polypropylene.

17. A fabric composite according to Claim 12 which has one meltblown inner layer which ranges In basis weight from about 5 to about 40 g/m².

18. A fabric composite according to Claim 1 wherein the composite layers have been thermally bonded with a discontinuous pattern of points, lines, or other pattern of intermittent bonds.

19. A fabric composite according to Claim 18 wherein the layers of said composite have been thermally bonded together by passing said layers through a nip formed by a patterned calendar roll and a smooth roll, or between two patterned rolls, with at least some of said rolls being heated.

20. A fabric composite according to Claim 19 wherein a roll bonding temperature In the range of from about 110 °C to 130 °C and a bonding nip pressure in the range of from about 100 to 400 pounds/linear inch (175-700 N/cm) have been used to effect said thermal bonding.

21. A fabric composite according to Claim 1 wherein each of two spunbond and one meltblown layer constitute about 5 to 60% of the weight of said composite which is of an SMS configuration, with the three layers together constituting 100% of the SMS composite.

22. A fabric composite according to Claim 1 which has a. basis weight of from about 10 to about 300 grams per square meter (gsm).

23. A fabric composite according to Claim 1 which exhibits cross direction stretch ranging from about 100% to about 250% with minimal stretch In the machine direction.

24. The multi-layer nonwoven fabric composite according to claim 1 prepared by forming the layers of said composite In a machine direction, said multi-layer nonwoven fabric composite comprising:
a) at least one inner layer comprising elastomeric meltblown fibers; and
b) two outer layers, each of which outer layers comprises spunbond, continuous filament fibers, with each outer layer being disposed on opposite sides of said at least one inner layer;
wherein the spunbond fibers in at least one said outer layers comprise both - first spunbond fibers formed from a first type of polymeric material and second spunbond fibers formed from a second type of polymeric material which is different from said first type of polymeric material; and
wherein said spunbond fibers are deposited during formation of at least one of said outer layers so as to form a plurality of alternating; discrete, substantially parallel stripes of fibers within at least one of said outer layers, which alternating stripes are formed alternately of said first spunbond fibers and said second spunbond fibers; and
wherein said alternating, discrete, substantially parallel stripes of fibers are deposited during formation of at least one of said outer layers so as to be predominately oriented in the machine direction of said nonwoven fabric composite; and
wherein all layers of said nonwoven fabric composite are bonded together via thermal, adhesive, ultra-sonic or mechanical bonding means.

25. A fabric composite according to Claim 24 wherein at least one of said outer layers comprises from about 50 to about 150 alternating stripes of substantially uniform width per meter of cross section width of said outer layer.

## Patentansprüche

1. Mehrlagiger nichtgewobener Textilverbundstoff, der durch Bilden der Lagen des Verbundstoffs in einer Maschinenrichtung hergestellt wird, wobei der mehrlagige nichtgewobene Textilverbundstoff Folgendes umfasst:
a) mindestens eine Innenlage umfassend schmelzgeblasene Fasern; und
b) mindestens eine Außenlage umfassend endlose Spinnvliesfilamentfasern, wobei die mindestens eine Außenlage sich auf einer Seite der mindestens einer Innenlage befindet;
wobei die Spinnvliesfasern in der mindestens einen Außenlage verschiedene Fasern umfassen, die aus mindestens zwei verschiedenen Typen polymeren Materials gebildet sind; und
wobei die Spinnvliesfasern während der Bildung der mindestens einen Außenlage so abgelegt werden, dass sie eine Mehrzahl einzelner, im Wesentlichen paralleler Streifen von Fasern innerhalb der mindestens einen Außenlage bilden, wobei einer von mindestens zwei der Streifen von Fasern eine polymere Struktur aufweist, die von dem anderen der mindestens zwei der Streifen dadurch verschieden und unterschiedlich ist, dass sie Fasern darin umfasst, die aus verschiedenen Typen polymeren Materials gebildet sind; und
wobei im Wesentlichen parallele, verschiedene Streifen von Fasern während der Bildung der mindestens einen Außenlage so abgelegt werden, dass sie hauptsächlich in der Maschinenrichtung des nichtgewobenen Textilverbundstoffs orientiert sind; und
wobei die mindestens eine Innenlage und die mindestens eine Außenlage des Textilstoffs durch Wärme-, Klebstoff-, Ultraschall- oder mechanische Bondiermöglichkeiten zusammenbondiert werden.

2. Textilverbundstoff nach Anspruch 1, wobei ein Typ Streifen der Spinnvliesfasern in mindestens einer der Außenlagen Polypropylen umfasst und ein anderer Typ Streifen Polypropylen, das mit einem elastomeren Polymer gemischt ist, umfasst

3. Textilverbundstoff nach Anspruch 2, wobei die Spinnvliesfasern in jeder der Außenlagen unabhängig teilweise auf einen Durchschnitt von etwa 1,8 bis etwa 3,0 Denier pro Filament verfeinert sind.

4. Textilverbundstoff nach Anspruch 3, wobei ein Typ Streifen von Spinnvliesfasern in der mindestens einen Außenlage Mischungen von Polypropylen mit Copolymeren von Ethylen und Propylen oder Copolymeren von Ethylen und/oder Propylen und mindestens einem anderen α-Olefin umfasst.

5. Textilverbundstoff nach Anspruch 3, wobei ein Typ Streifen von Spinnvliesfasern in einer oder beiden der Außenlagen Multikomponentenfasern umfasst, wobei jede mindestens ein elastomeres Polymer und mindestens ein einzelnes nichtelastomeres Polymer umfasst.

6. Textilverbundstoff nach Anspruch 5, wobei ein Typ Streifen von Spinnvlies-Multikomponentenfasern Bikomponentenfasern umfasst, die einen elastomeren Polymerkern ausgewählt unter Polyestern, Polyurethanen, Polyamiden, Copolymeren von Ethylen und mindestens einem Vinylmonomer und A-B-A'-Blockcopolymeren und einen nichtelastomeren Mantel, der nichtelastomeres Polyolefin umfasst, umfassen.

7. Textilverbundstoff nach Anspruch 3, wobei die Spinnvliesfasern in den Streifen der mindestens einen Außenlage unabhängig Polymere oder Polymerkombinationen umfassen, die eine Schmelzflussrate von etwa 20 bis etwa 80 aufweisen.

8. Textilverbundstoff nach Anspruch 1, wobei die Spinnvliesfasern als Streifen von zwei Typen von Filamenten in einem abwechselnden Muster paralleler Streifen extrudiert werden.

9. Textilverbundstoff nach Anspruch 1, wobei die parallelen Streifen von Spinnvliesfasern hauptsächlich in der Maschinenrichtung innerhalb jeder Spinnvlieslage durch Aufrechterhalten der Orientierung der Streifen von Fasern im Wesentlichen parallel zur Maschinenrichtung des Substrats, auf das derartige Streifen von Spinnvliesfasern unter Bildung der Spinnvlieslagen abgelegt worden sind, orientiert werden.

10. Textilverbundstoff nach Anspruch 9, wobei jede der Spinnvlieslagen unabhängig ein Verhältnis von Zugfestigkeit in Maschinenrichtung zur Zugfestigkeit in Querrichtung von mindestens etwa 1,25:1 aufzeigt.

11. Textilverbundstoff nach Anspruch 1, wobei jede der Spinnvlieslagen unabhängig ein Flächengewicht im Bereich von etwa 5 bis etwa 45 g/m² aufweist.

12. Textilverbundstoff nach Anspruch 1, wobei die Fasern der mindestens einen schmelzgeblasenen Lage polymere Materialien umfassen ausgewählt aus der Gruppe bestehend aus elastischen Polyolefinen, elastischen Polyestern, elastischen Polyurethanen, elastischen Polyamiden, elastischen Copolymeren von Ethylen und mindestens einem Vinylmonomer und elastischen A-B-A'-Blockcopolymeren, wobei A und A' dasselbe oder verschiedene thermoplastische Polymer(e) sind.

13. Textilverbundstoff nach Anspruch 12, wobei die Fasern der mindesten einen schmelzgeblasenen Lage elastische Polyolefine umfassen ausgewählt aus der Gruppe bestehend aus statistischen Copolymeren von Ethylen und Propylen oder statistischen Copolymeren von Ethylen und/oder Propylen und mindestens einem anderen α-Olefin und Mischungen der statistischen Copolymere mit isotaktischem Polypropylen.

14. Textilverbundstoff nach Anspruch 12, wobei die schmelzgeblasenen Fasern in der mindesten einen Innenlage Multikomponentenfasern umfassen, die jede mindestens ein elastomeres Polymer und mindestens ein einzelnes nichtelastomeres Polymer umfassen.

15. Textilverbundstoff nach Anspruch 14, wobei die schmelzgeblasenen Multikomponentenfasern Zweikomponentenfasern sind, die einen elastomeren Polymerkern ausgewählt unter Polyestern, Polyurethanen, Polyamiden, Copolymeren von Ethylen und mindestens einem Vinylmonomer und A-B-A'-Blockcopolymeren und einen nichtelastomeren Mantel, der nichtelastomeres Polyolefin umfasst, unmfassen.

16. Textilverbundstoff nach Anspruch 15, wobei die Bikomponentenfasern einen Mantel aus Polypropylen umfassen.

17. Textilverbundstoff nach Anspruch 12, der eine schmelzgeblasene Innenlage aufweist, die bezüglich des Flächengewichts im Bereich von etwa 5 bis etwa 40 g/m² liegt.

18. Textilverbundstoff nach Anspruch 1, wobei die Verbundstofflagen thermisch durch ein diskontinuierliches Muster von Punkten, Linien oder anderes Muster von in Abständen auftretenden Bindungen bondiert worden sind.

19. Textilverbundstoff nach Anspruch 18, wobei die Lagen des Verbundstoffs thermisch durch Hindurchführen der Lagen durch einen Spalt, der durch eine mit einem Muster versehene Kalanderwalze und eine glatte Walze gebildet wird, oder zwischen zwei mit einem Muster versehenen Walzen, wobei mindestens ein Teil der Walzen erhitzt wird, zusammenbondiert worden sind.

20. Textilverbundstoff nach Anspruch 19, wobei eine Walzenbondiertemperatur im Bereich von etwa 110 °C bis 130 °C und ein Bondierspaltdruck im Bereich von etwa 100 bis 400 Pfund/linearen Zoll (175 - 700 N/cm) zum Bewirken des thermischen Bondierens angewendet worden sind.

21. Textilverbundstoff nach Anspruch 1, wobei jede von zwei Spinnvlies- und eine schmelzgeblasene Lage etwa 5 bis 60 % des Gewichts des Verbundstoffs ausmachen, der eine SMS- (Spinnvlies/Schmelzblas/Spinnvlies-) Konfiguration aufweist, wobei die drei Lagen zusammen 100 % des SMS-Verbundstoffs bilden.

22. Textilverbundstoff nach Anspruch 1, der ein Flächengewicht von etwa 10 bis etwa 300 Gramm pro Quadratmeter (g/m³) aufweist.

23. Textilverbundstoff nach Anspruch 1, der eine Querrichtungsdehnung im Bereich von etwa 100 % bis etwa 250 % bei einer minimalen Dehnung in Maschinenrichtung aufweist.

24. Mehrlagiger nichtgewobener Textilverbundstoff nach Anspruch 1, der durch Bilden der Lagen des Verbundstoffs in einer Maschinenrichtung hergestellt wird, wobei der mehrlagige nichtgewobene Textilverbundstoff Folgendes umfasst:
a) mindestens eine Innenlage umfassend elastomere schmelzgeblasene Fasern; und
b) zwei Außenlagen, wobei jede der Außenlagen endlose Spinnvliesfilamentfasern umfasst, wobei jede Außenlagen sich auf gegenüberliegenden Seiten der mindestens einen Innenlage befindet;
wobei die Spinnvliesfasern in mindestens einer der Außenlagen sowohl erste Spinnvliesfasern, die aus einem ersten Typ polymeren Materials gebildet sind, als auch zweite Spinnvliesfasern, die aus einem zweiten Typ polymeren Materials gebildet sind, das von dem ersten Typ polymeren Materials verschieden ist, umfassen; und
wobei die Spinnvliesfasern während der Bildung mindestens einer der Außenlagen so abgelegt werden, dass sie eine Mehrzahl abwechselnder, einzelner, im Wesentlichen paralleler Streifen von Fasern innerhalb mindestens einer der Außenlagen bilden, wobei abwechselnde Streifen abwechseln aus den ersten Spinnvliesfasern und den zweiten Spinnvliesfasern gebildet werden; und
wobei die abwechselnden, einzelnen, im Wesentlichen parallelen Streifen von Fasern während der Bildung von mindestens einer der Außenlagen so abgelegt werden, dass sie hauptsächlich in der Maschinenrichtung des nichtgewobenen Textilverbundstoffs orientiert sind; und
wobei alle Lagen des nichtgewobenen Textilverbundstoffs durch Wärme-, Klebstoff-, Ultraschall- oder mechanische Bondiermöglichkeiten zusammenbondiert werden.

25. Textilverbundstoff nach Anspruch 24, wobei mindestens eine der Außenlagen etwa 50 bis etwa 150 abwechselnde Streifen im Wesentlichen gleichförmiger Breite pro Meter Querschnittsbreite der Außenlage umfasst.

## Revendications

1. Composite multicouche de textile non-tissé préparé par la formation des couches dudit composite dans un sens de la machine, ledit composite multicouche de textile non-tissé comprenant:
a) au moins une couche interne comprenant des fibres de fusion soufflage; et
b) au moins une couche externe comprenant des fibres de filaments continus filées-liées, ladite au moins une couche extérieure étant disposée sur une face de ladite au moins une couche interne;
dans lequel les fibres filées-liées dans ladite au moins une couche externe comprennent des fibres différentes formées d'au moins deux types différents de matériau polymère; et
dans lequel lesdites fibres filées-liées sont déposées durant la formation de ladite au moins une couche externe afin de former une pluralité de bandes discrètes substantiellement parallèles à l'intérieur de ladite au moins une couche externe, une des au moins deux desdites bandes de fibres ayant une constitution polymère qui est différente et distincte de l'autre desdites au moins deux desdites bandes en ce sens qu'elle comprend des fibres à l'intérieur, qui sont formées à partir de types différents de matériau polymère; et
dans lequel lesdites bandes différentes substantiellement parallèles de fibres sont déposées durant la formation de ladite au moins une couche externe afin d'être orientées de manière prédominante dans le sens de la machine dudit composite de textile non-tissé; et
dans lequel ladite au moins une couche interne et ladite au moins une couche externe dudit textile sont liées ensemble via des moyens de liaison thermique, adhésif, par ultrason ou mécanique.

2. Composite textile selon la revendication 1, dans lequel un type de bande desdites fibres filées-liées dans au moins l'une desdites couches externes comprend du polypropylène et un autre type de bande comprend du polypropylène mélangé avec un polymère élastomère.

3. Composite textile selon la revendication 2, dans lequel lesdites fibres filées-liées dans chacune desdites couches externes sont indépendamment partiellement atténuées jusqu'à une moyenne d'environ 1,8 à environ 3,0 deniers par filament.

4. Composite textile selon la revendication 3, dans lequel un type de bande de fibres filées-liées dans ladite au moins une couche externe comprend des mélanges de polypropylène avec des copolymères d'éthylène et de propylène ou de copolymères d'éthylène et/ou de propylène et d'au moins une autre α-oléfine.

5. Composite textile selon la revendication 3, dans lequel un type de bande de fibres filées-liées dans l'une ou les deux desdites couches externes comprend des fibres multicomposées comprenant chacune au moins un polymère élastomère et au moins un polymère non-élastomère distinct.

6. Composite textile selon la revendication 5, dans lequel un type de bande de fibres multicomposées filées-liées comprend des fibres bicomposées comprenant un noyau polymère élastomère choisi parmi les polyesters, les polyuréthanes, les polyamides, les copolymères d'éthylène et au moins un monomère de vinyle, et les copolymères séquencés type A-B-A' et une enveloppe non-élastomère comprenant une polyoléfine non-élastomère.

7. Composite textile selon la revendication 3, dans lequel lesdites fibres filées-liées dans les bandes de ladite au moins une couche externe comprennent indépendamment des polymères ou des combinaisons de polymères ayant une vitesse d'écoulement à l'état fondu d'environ 20 à environ 80.

8. Composite textile selon la revendication 1, dans lequel lesdites fibres filées-liées sont extrudées sous la forme de bandes de deux types de filaments en un motif alterné de bandes parallèles.

9. Composite textile selon la revendication 1, dans lequel lesdites bandes parallèles de fibres filées-liées sont orientées de manière prédominante dans le sens de la machine à l'intérieur de chaque couche filée-liée par le maintien du sens desdites bandes de fibres substantiellement parallèlement au sens de la machine du substrat sur lequel de telles bandes de fibres filées-liées ont été déposées pour former lesdites couches filées-liées.

10. Composite textile selon la revendication 9, dans lequel chacune desdites couches filées-liées fait preuve indépendamment d'un rapport de la résistance à la traction dans le sens de la machine à la résistance à la traction dans le sens transversal d'au moins environ 1,25:1.

11. Composite textile selon la revendication 1, dans lequel chacune desdites couches filées-liées a indépendamment un poids de base s'étendant d'environ 5 à environ 45 g/m².

12. Composite textile selon la revendication 1, dans lequel les fibres de ladite au moins une couche de fusion soufflage comprend des matériaux polymères choisis parmi le groupe constitué des polyoléfines élastiques, des polyesters élastiques, des polyuréthanes élastiques, des polyamides élastiques, des copolymères élastiques d'éthylène et d'au moins un monomère de vinyle et des copolymères élastiques séquencés type A-B-A' dans lesquels A et A' sont un polymère thermoplastique identique ou différent.

13. Composite textile selon la revendication 12, dans lequel les fibres de ladite au moins une couche de fusion soufflage comprend des polyoléfines élastiques choisies parmi le groupe constitué des copolymères aléatoires d'éthylène et de propylène ou des copolymères aléatoires d'éthylène et/ou de propylène et d'au moins une autre α-oléfine, et des mélanges desdits copolymères aléatoires avec du polypropylène isotactique.

14. Composite textile selon la revendication 12, dans lequel lesdites fibres de fusion soufflage dans ladite au moins une couche interne comprend des fibres multicomposées comprenant chacune au moins un polymère élastomère et au moins un polymère non-élastomère distinct.

15. Composite textile selon la revendication 14, dans lequel lesdites fibres multicomposées de fusion soufflage sont des fibres bicomposées comprenant un noyau polymère élastomère choisi parmi les polyesters, les polyuréthanes, les polyamides, les copolymères d'éthylène et d'au moins un monomère de vinyle, et les copolymères séquencés type A-B-A' et une enveloppe non-élastomère comprenant une polyoléfine non-élastomère.

16. Composite textile selon la revendication 15, dans lequel lesdites fibres bicomposées comprennent une enveloppe de polypropylène.

17. Composite textile selon la revendication 12, qui a une couche interne de fusion soufflage qui s'étend en poids de base d'environ 5 à environ 40 g/m².

18. Composite textile selon la revendication 1, dans lequel les couches composites ont été thermiquement liées avec un motif discontinu de points, de lignes ou un autre motif de liaisons intermittentes.

19. Composite textile selon la revendication 18, dans lequel les couches dudit composite ont été thermiquement liées ensemble en faisant passer lesdites couches à travers un resserrement formé d'un cylindre de calandrage à motif et d'un cylindre lisse, ou entre deux cylindres à motif avec au moins une partie desdits cylindres qui est chauffée.

20. Composite textile selon la revendication 19, dans lequel une température de liaison des cylindres dans la plage d'environ 110°C à 130°C et une pression de liaison du resserrement située dans la plage d'environ 100 à 400 livres/pouce linéaire (175-700 N/cm) ont été utilisées pour effectuer ladite liaison thermique.

21. Composite textile selon la revendication 1, dans lequel chacune de deux couches filées-liées et une de fusion soufflage constituent environ 5 à 60 % du poids dudit composite qui est de configuration SMS, les trois couches constituant ensemble 100 % du composite SMS.

22. Composite textile selon la revendication 1, qui a un poids de base d'environ 10 à environ 300 grammes par mètre carré (g/m²).

23. Composite textile selon la revendication 1, qui fait preuve d'un étirement transversal s'étendant d'environ 100 % à environ 250 % avec étirement minimal dans le sens de la machine.

24. Composite textile non-tissé multicouche selon la revendication 1, préparé par la formation des couches dudit composite dans un sens de la machine, ledit composite textile non-tissé multicouche comprenant:
a) au moins une couche interne comprenant des fibres de fusion soufflage élastomère; et
b) deux couches externes, chacune de ces couches externes comprenant des fibres de filaments continus filées-liées, chaque couche externe étant disposée sur les côtés opposés de ladite au moins une couche interne;
dans lequel les fibres filées-liées dans au moins l'une desdites couches externes comprennent toutes les deux des premières fibres filées-liées formées à partir d'un premier type de matériau polymère et des secondes fibres filées-liées formées à partir d'un second type de matériau polymère qui est différent dudit premier type de matériau polymère; et
dans lequel lesdites fibres filées-liées sont déposées durant la formation d'au moins l'une desdites fibres externes afin de former une pluralité de bandes alternées, discrètes, substantiellement parallèles de fibres à l'intérieur d'au moins l'une desdites couches externes, lesquelles bandes alternées sont formées alternativement desdites premières fibres filées-liées et desdites secondes fibres filées-liées; et
dans lequel lesdites bandes alternées, discrètes, substantiellement parallèles de fibres sont déposées durant la formation d'au moins l'une desdites couches externes afin d'être orientées de manière prédominante dans le sens de la machine dudit composite textile non-tissé; et
dans lequel toutes les couches dudit composite textile non-tissé sont liées ensembles via des moyens de liaison thermique, adhésif, par ultrasons ou mécanique.

25. Composite textile selon la revendication 24, dans lequel au moins l'une desdites couches externes comprend d'environ 50 à environ 150 bandes alternées d'une largeur substantiellement uniforme par mètre de section transversale de ladite couche externe.
